(19) Europäisches Patentamt
European Patent Office
Office européen des brevets

(11) **EP 4 682 486 A1**

(12) **EUROPEAN PATENT APPLICATION**

(43) Date of publication:
**21.01.2026 Bulletin 2026/04**

(21) Application number: **24020238.2**

(22) Date of filing: **17.07.2024**

(51) International Patent Classification (IPC):
**G01J 3/02** *(2006.01)* **G01J 3/10** *(2006.01)*

(52) Cooperative Patent Classification (CPC):
**G01J 3/10; G01J 3/0205; G01J 3/027;**
G01J 2003/102; G01J 2003/104; G01J 2003/106

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **AVICON R&D SPÓLKA Z OGRANICZONA ODPOWIEDZIALNOSCIA 02-486 Warszawa (PL)**

(72) Inventors:
• **Jaczewski, Jan**
  **04-046 Warszawa (PL)**
• **Zabielski, Tomasz**
  **01-390 Warszawa (PL)**

(74) Representative: **Marcinska-Porzuc, Aleksandra Kancelaria Patentowa Ul. J. Slowackiego 5/149 01-592 Warszawa (PL)**

(54) **METHOD AND APPARATUS FOR PERFORMING SPECTRAL MEASUREMENTS**

(57) The invention relates to a method for performing spectral measurements, in which a reference plate and an examined object are illuminated or transilluminated with an illuminator consisting of at least one light source, and an image sensor records the image obtained from the reference plate and the examined object. The reference plate has a high and constant reflectivity in the analyzed wavelength range. The reference plate and the object are sequentially illuminated with light having a spectrum selected so that the recorded response of the image sensor has the highest possible value in each of the measurement bands. The intensity of the light source is adjusted based on the response of the object being examined, and the method comprises the following steps: switching off all light sources except one light source with a selected specific wavelength; adjusting the intensity of the light source with the selected specific wavelength until the response of the image sensor is close to the saturation value; switching on the next light source in terms of wavelength and adjusting its intensity until the response of the image sensor is close to the saturation value; examining the response of the image sensor to see if the saturation value of the image sensor has been reached in the previously selected specific wavelength ranges; if the saturation value is reached, the intensity of the previously selected specific light sources is reduced; the above steps are repeated until the intensity of all light sources with the analyzed wavelengths is adjusted to obtain a quasi-continuous spectral response. The invention also relates to a device implementing this method.

FIG. 8

## Description

## Field of the invention

This invention relates to a method for performing spectral measurements, in particular colorimetric measurements and an apparatus for performing spectral measurements, especially colorimetric measurements.

## Background of the invention

Colorimetric measurements used to determine and assess the color of various objects are used in many technical fields. Besides typical use in print control, they are employed in processes where the verification of color correctness is important for various reasons. For example, in the automotive industry, paint surfaces are examined and evaluated. Colorimetric measurements are also used for furniture, floors and many other articles of everyday use.

## State of the art

Colorimetric measurement is a special case of spectral measurements. The way of transition from spectral measurement to the commonly used CIE (L*a*b*) color space is described, inter alia in the ISO 13655 standard or the ASTM-E308-18 guidelines. The application of the invention is not limited to colorimetric measurement but is advantageous in any task that requires acquisition of an electromagnetic signal in the light range (200nm-3000nm) over a wide spectrum. The challenge here is the high variability of the detector's quantum efficiency as a function of the registered wavelength in the measurement range used.

Generally, hyperspectral and multispectral measurements involve recording attenuation, reflectivity or absorption by the examined object, for individual analyzed wavelength ranges.

The approach to damping measurement is generally known, which is implemented by placing the object being examined behind the light source and the radiation detector behind the object being examined and recording the spectrum of light passing through the object. The radiation spectrum is recorded in such a way that firstly, without the examined object, the radiation detector records the spectrum of the radiation source itself. Then, the examined object is placed between the source and the radiation detector. The radiation spectrum occurring behind the examined object is recorded again. Damping is then determined in a simplified manner as the difference between the recorded spectrum when there is no object between the light source and the detector, and the spectrum after the object is placed. The detector may be, for example, a light-sensitive matrix operating in the range of visible radiation, infrared, thermographic, or UV.

On the other hand, reflectivity or absorption measurement is performed by illuminating the object and recording the spectrum of the reflected light. In a simplified manner, reflectivity is determined as the difference between the recorded spectrum of the reference object and the recorded spectrum of the measured object. The reference object should have a high and constant reflectivity in the range of analyzed wavelengths.

From the patent document US 8102530B2, a colorimetric device is known containing a semiconductor source of electromagnetic radiation, emitting light waves incident on the examined surface and a radiation detector, which receives at least part of the radiation scattered by the examined surface. Frequency analysis of the radiation reaching the detector is performed in the detector. Additionally, using a sensor, the device also measures at least one electrical parameter of the light source and, based on the received electrical parameter, determines at least one characteristic value of the light emitted by the radiation source. The document also discloses a method for determining the color properties of examined surfaces, comprising the step of emitting light from the light source onto the examined surface, the step of detecting at least part of the light reflected from the examined surface, the step of analyzing the reflected light radiation, the step of measuring at least one electrical parameter of the light source, and the step of determining at least one characteristic value of the emitted light. At least one electrical parameter of the light source is the forward voltage or forward current of the semiconductor element emitting light radiation. At least one characteristic value is determined based on the previously determined spectral distribution of the light radiation emitted onto the examined surface.

However, the solution presented in US 8102530B2 is limited only to a colorimetric device. Moreover, the controller in the form of a processor device receives at least one parameter from the lighting controller. This represent a certain limitation of this solution. It would be desirable to have a solution in which the controller for example; in the form of a computer, does not receive any parameters from the illuminator.

From the German patent application DE19736844A1, a device consisting of two sensors: a reference sensor and a measurement sensor, is known. This solution concerns point measurement, in which the sensors measure the average response from a certain area. However, a multi-point measurement would be desirable.

To detect the spectrum, sensors are used, in particular single or multiple sensors, connected in lines or matrices. Sensors are characterized by varying quantum efficiency as a function of wavelength. The above implies that if a white sample is illuminated with light of constant intensity over the entire measurement range, the white sample characterized by a high and constant reflectivity in the range of analyzed wavelengths, the sensor will give a much higher response in the range, where the quantum efficiency is high, compared to the range with low quantum efficiency. On the other hand, in ranges where the sensor has low quantum efficiency, the recorded value is much lower than in ranges with high quantum efficiency. This means that the signal-to-noise ratio in ranges with low quantum efficiency is significantly lower than in ranges with high quantum efficiency, often preventing the use of the acquired data. Therefore, there is a problem of inhomogeneity of the obtained data. Data for different wavelength ranges are characterized by a different signal-to-noise ratio, SNR. Analysis and processing of spectral data often rely on algorithms that, in order to become independent of the intensity of reflected light, are based on determining derivatives, i.e., differentials of the measured signal. High noise levels for low effective signal values result in discontinuities and high derivative variability. This translates into large measurement errors and problems with signal classification.

So far, in order to solve the above-mentioned drawbacks from the state of the art, due to the continuous nature of the light sources used, band-pass filters were used, introducing damping in bands where the measurement sensor was characterized by the highest quantum efficiency. However, the use of filters results in discontinuities in the detected spectrum, either at the end, or at the beginning and end of the attenuation range, preventing the determination of the derivative in this range, which makes measurements impossible in the filter cut-off location. In addition, the use of the filter makes it possible to reduce the variability of the quantum efficiency but is characterized by limited effectiveness. For example, US9983120B2 discloses a solution for colorimetric measurement using a filter. Here, an adjustable band-pass filter is used. Obtaining a spectral image requires the collection of many images, and the filter parameters are changed for each image. The drawback of this solution is therefore a limited number of analyzed bands or a long measurement time associated with the need to collect separate images for each wavelength. Therefore, a method for performing spectral measurements is desirable in which information about the full spectrum is obtained immediately. A device for performing spectral measurements would also be desirable, operating independently of the measurement method used.

Therefore, the object of this invention is to provide a method for performing spectral measurements, in particular colorimetric measurements, and a device for performing spectral measurements, especially colorimetric measurements, where the sensor acquisition time is set so that signal saturation does not occur over the entire measurement range. Furthermore, the object of this invention is to provide such illumination of the measured sample as to obtain a signal of a useful value regardless of the sensor quantum efficiency or the damping of the measured object. Additionally, the object of the proposed solution is to provide the device with reconfigurability for performing measurements of objects with different damping without the need for interfereng with the devices, for example, by replacing the filter.

Essence **of the invention**

The method for performing spectral measurements according to the invention is characterized in that a reference plate and an object are sequentially illuminated with light having a spectrum selected so that the recorded response of the image sensor has the highest possible value in each of the measurement bands. The intensity of the light source is also adjusted based on the response of the examined object. The method comprises the step of switching off all light sources except one light source with a selected specific wavelength. In the next step, the intensity of the light source with the selected specific wavelength is adjusted until the response of the image sensor is close to the saturation value. In the next step, the next light source in terms of wavelength is switched on and its intensity is adjusted until the response of the image sensor is close to the saturation value. In the next step, the response of the image sensor is examined to see if the saturation value of the image sensor has been reached in the previously selected specific wavelength ranges. If the saturation value is reached, the intensity of the previously selected specific light sources is reduced.

The above steps are repeated until the intensity of all light sources with the analyzed wavelengths is adjusted to obtain a quasi-continuous spectral response. Advantageously, for an object with high and relatively constant reflectivity/damping, the object is illuminated with light of a spectrum as close as possible to the inverse of the quantum efficiency curve of the image sensor used during the measurement. For other objects, the illumination is advantageously adjusted so that in areas with low reflectivity/high damping, enough light is directed to the object in the ranges indicated above to obtain a sensor response of a value high enough for the signal-to-noise ratio to be at a level sufficiently high for measurement/analysis. Preferably, the light source is a LED light emitting diode, and the adjustment of the LED light intensity is based on controlling the current flowing through the LED.

The device for performing spectral measurements according to the invention is characterized in that the illuminator has at least two light sources, selected so as to provide the obtaining of a continuous frequency spectrum in the measured range. The light sources have means for adjusting the light intensity and means for driving the light sources so that the recorded response of the image sensor has a high value in each of the measurement bands, preferably close to the saturation value. The means for adjusting the light intensity of the light source are coupled to the sensor so that, based on the response of the object being examined obtained from the image sensor, they provide an increase in the light intensity when the response of the object being examined has a value less than the saturation value, and they provide a decrease in the light intensity of the light source when the response of the examined object has a value greater than or equal to the saturation value. The means for driving the light sources are used to obtain a continuous frequency spectrum in the measured range. Advantageously, the light sources are light emitting diodes, mounted on a printed circuit board attached to a base, allowing heat dissipation, emitting light of different wavelengths. Between the light emitting diodes and the examined object there is an optical element that scatters light, ensuring uniformization of the light flux coming from the individual light emitting diodes, and an additional optical element that shapes the light flux for a specific measurement/inspection task. The device comprises light emitting diodes arranged in rows, where the driving means switch on and off individual LEDs emitting different wavelengths, so that their spectra do not overlap, but also, so that there are no gaps between the individual spectra. Thus, the device provides a continuous spectrum emitted by the illuminator.

Advantageously, the light emitting diodes of individual wavelengths are connected to separate control means constituting controlled current sources.

**Advantageous effects of the invention**

This invention eliminates the drawbacks of known solutions from the state of the art, significantly improving the signal-to-noise ratio, SNR. In addition, after the calibration process, i.e., during the measurement, no information about the lighting parameters is exchanged between the algorithm and the physical lighting controller. Additionally, in this invention, the recorded signal not only has the highest possible SNR in the analyzed measurement range, but also provides the continuity of the detected signal, allowing the use of algorithms that use derivative calculations, i.e., differentials of the measured signal. The proposed solution is also more effective than that achieved in approaches where filters are used to reduce quantum efficiency variability.

**Brief description of the drawings**

The method and apparatus for performing spectral measurements are presented in an exemplary embodiment illustrated in the figures, wherein:

FIG. 1 presents an example of the arrangement of point light sources according to the invention,

FIG. 2 presents another example of the arrangement of point light sources according to the invention,

FIG. 3 illustrates a light source in the form of an LED mounted on a printed circuit board with additional optical elements according to the invention,

FIG. 4 illustrates multiple rows of light sources with adjusting and driving means according to the invention

FIG. 5 illustrates the quantum efficiency as a function of wavelength of an exemplary sensor operating in accordance with the method according to the invention,

FIG. 6 illustrates the measured light intensity value as a function of wavelength, obtained using the method according to the invention,

FIG. 7 illustrates, in normalized values, a comparison of the spectrum of a halogen sensor from the state of the art with the spectrum of a sensor performing the measurement according to the invention,

FIG. 8 illustrates, in normalized values, a comparison of the response of a halogen sensor from the state of the art with the response of a sensor performing the measurement according to the invention,

FIG. 9 illustrates the steps of the method according to the invention.

**Exemplary embodiment of the invention**

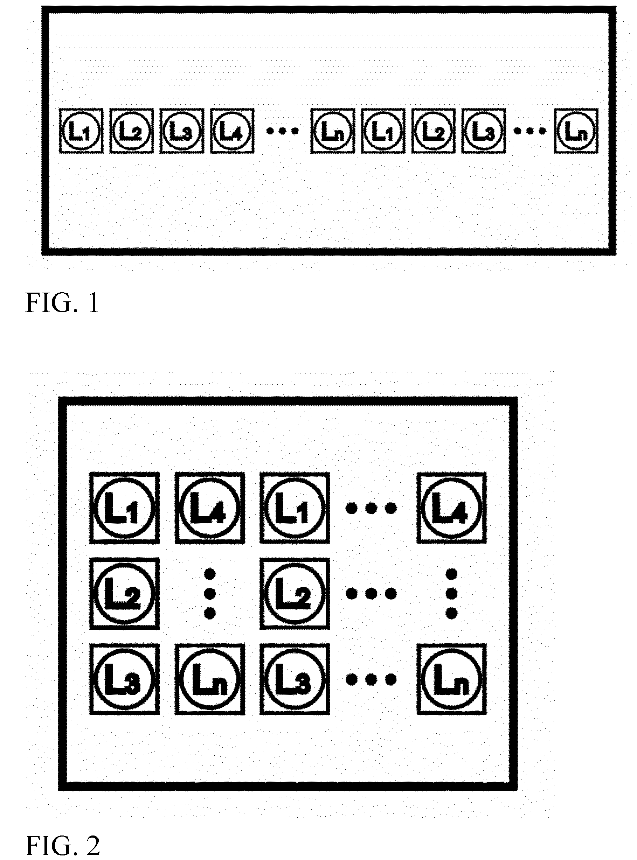

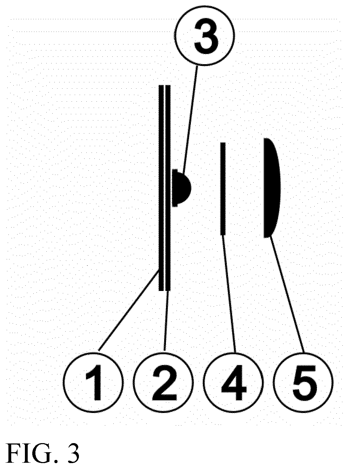

The invention will be described in more detail in the form of an embodiment in which the device for performing spectral measurements uses the construction of an illuminator consisting of light sources grouped in several rows. Each row of light sources has N linearly arranged point light sources. FIG. 1 presents two rows of point light sources $L_i... L_n$, placed one behind the other. The point light sources $L_i... L_n$ are LED light emitting diodes. The number N of point light sources $L_1 ... L_n$ is not limited to a specific value. The number N of diodes in a row is related to the measurement range of the device for performing spectral measurements. The wider the measurement range required to examine the object, the more LEDs must be in the row. The invention is also not limited to a specific number of rows, as the number of rows is also related to the measurement range. Substancially, the more rows there are and the more LEDs there are in a row, the wider the measurement range of the device will be. The proposed solution is therefore not strictly limited here in terms of the number N of point light sources $L_1 ... L_n$, or how the point light sources are arranged in a row, or how the rows are arranged relative to each other. However, it is important to choose LEDs and control them in such a way as to provide a continuous spectrum emitted by such an illuminator. FIG. 2 presents an example of the arrangement of two rows of LEDs in a different configuration than in FIG. 1. FIG. 3 presents in a simplified manner a light source in the form of an LED mounted on a printed circuit board with additional optical elements. The base 1 of the illuminator is attached to a printed circuit board 2 on which a light emitting diode 3 is mounted, constituting one of the point light sources $L_i... L_n$. The LEDs are arranged so as to enable the dissipation of heat generated during operation. In front of each LED 3 there is an optical system 4 in the form of a film that scatters light rays emitted by the LED 3. The film 4 ensures uniformization of the light flux coming from the individual LEDs 3. In front of the scattering film there is an additional optical system 5, shaping the light flux depending on the specific measurement/inspection task. The optical system 5 can be freely removed and replaced with one that is suitable for specific requirements related to the examined object.

LEDs 3 are placed in rows $L_1 ... L_n$ so that each LED 3 emits light of a different wavelength in the range of $Li... L_n$. The length N of the row and the number of rows in the illuminator are selected so as to ensure that the light emitted by the LEDs 3 is spectrally uniform. It is crucial to choose diodes so that their spectra do not overlap, but also so that there are no gaps between the individual spectra. It is also possible to use more than one illuminator. If it is necessary to use a much larger number of LEDs 3 than is possible for scattering that ensures spectral uniformity, more than one illuminator can be used, wherein each illuminator containing then a different row $L_1... L_n$ of LEDs 3 with a length N no greater than that providing effective scattering.

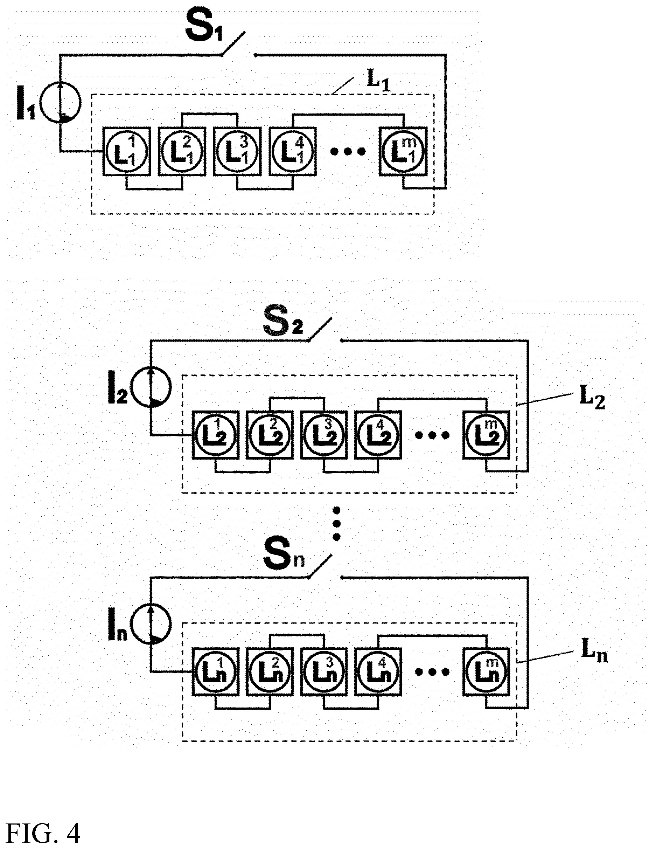

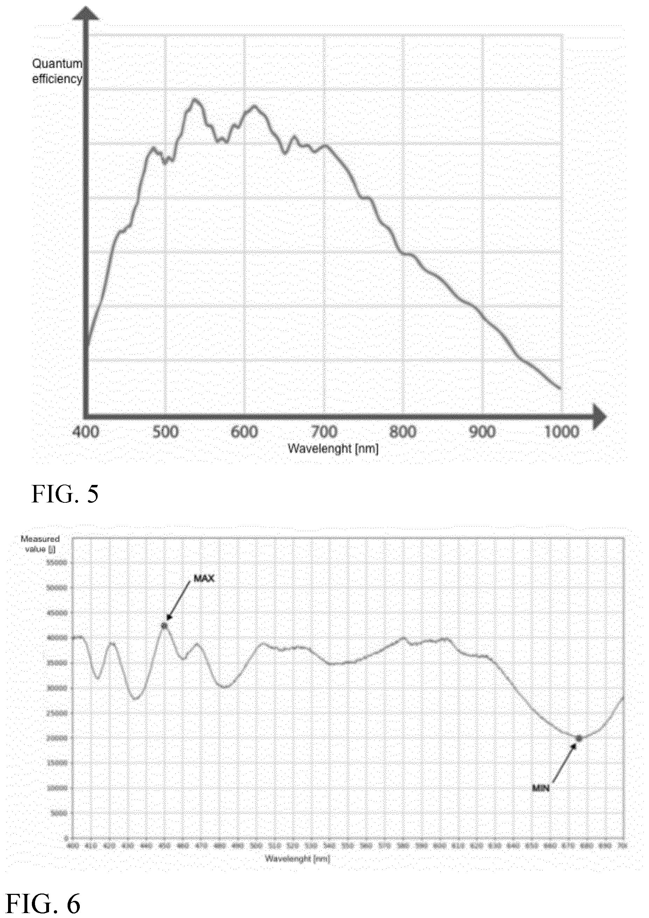

FIG. 4 presents many rows $Li... L_n$ of LEDs 3 with driving means $S_1...S_n$ and intensity adjusting means $I_1 ...I_n$. All LEDs in the first row $L_1^1 ... L_1^m$ have driving means $S_1$ and intensity adjusting means $I_1$ for the LEDs in the first row. All LEDs in the second row $L_2^1 ... L_2^m$ have driving means $S_2$ and intensity adjusting means $I_2$ for the LEDs in the second row. All LEDs in the nth row $L_n^1 ... L_n^m$ have driving means $S_n$ and intensity adjusting means $I_n$ for the LEDs in the nth row. The means for driving the LEDs in the nth row are connected in series with the LEDs in the nth row. An electronic switch $S_n$, constituting the means for driving the LEDs in the nth row, enable the flow of electric current through the LEDs in the nth row when it is in the active state, and interrupts the flow of current through the LEDs in the nth row when it is in the inactive state. Activation of the electronic switch $S_1$ causes current to flow through the row $L_1$ of LEDs. The LEDs in row $L_1$ then emit light of the first wavelength. Activation of the electronic switch $S_2$ causes current to flow through the row $L_2$ of LEDs. The LEDs in row $L_2$ then emit light of the second wavelength, different from the wavelength emitted by the LEDs in row $L_1$. The means for adjusting the LEDs in the nth row are a controlled current source $I_n$. By controlling the current source $I_n$, an ajustment in the intensity of the LEDs in row $I_n$ is obtained. This way, the intensity of the light is adjusted for specific wavelengths emitted by the individual LEDs. By controlling the current of individual LED rows, the sensor response was obtained using the Specim FX 10 hyperspectral camera, which response is shown in FIG. 5 and FIG. 6. As can be seen, the sensor response for short waves is very low. In this range, it is not possible to perform measurements due to the SNR level. The disclosed solution, for the presented case, is characterized by a decrease in SNR only to 37% of the maximum value. In the same case, using halogen illumination, the SNR drops to 1.5% of the maximum value, making it impossible to perform effective measurements in this range.

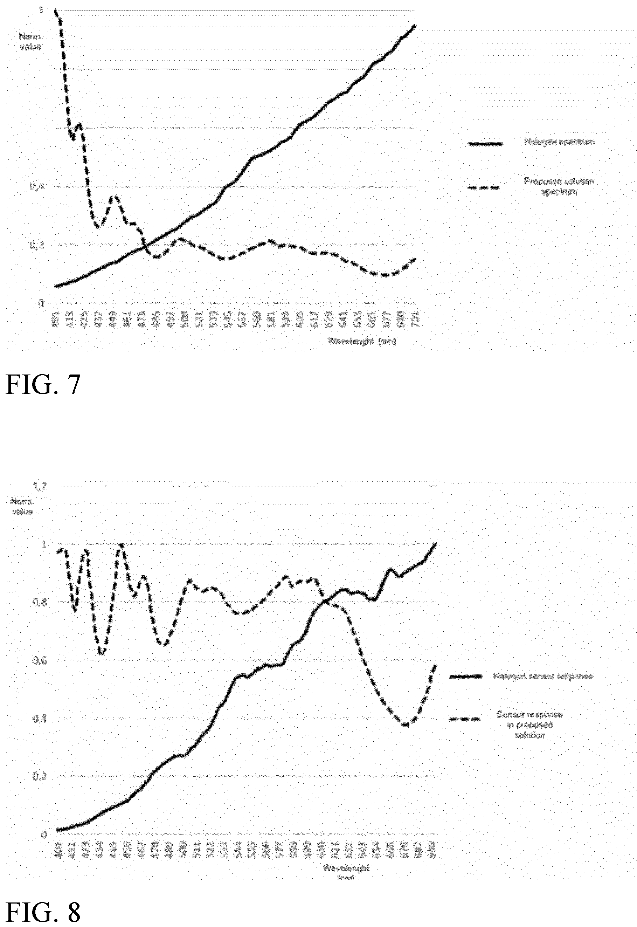

FIG. 7 illustrates the spectrum of a typical halogen light source and the spectrum obtained from the light source proposed in the disclosed solution. In the proposed solution, the means for adjusting the intensity of the rows of LED 3 diodes control the flow of current flowing through the LEDs 3 so as to obtain the intensity of the LEDs 3 as the inverse of the quantum efficiency of the Specim FX10 camera sensor used. The sensor response in the case of halogen illumination as well as according to the disclosed solution is illustrated in FIG. 8.

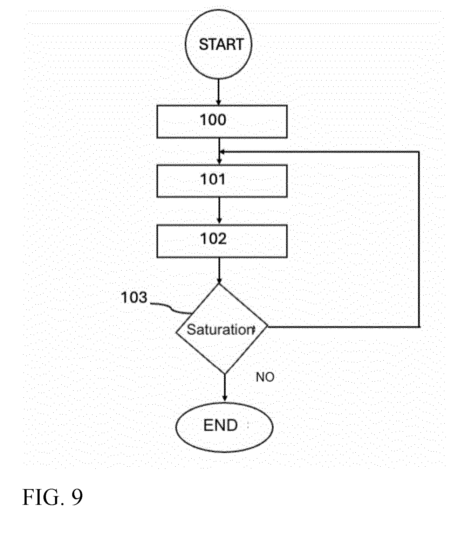

FIG. 9 schematically presents the steps of the method according to the invention. The method of adjusting the intensity of individual rows with LEDs is as follows: first, in the calibration process marked as step 100, the illumination should be directed to a reference plate with high and constant reflectivity in the analyzed wavelength range, and the image sensor should record the image of the illuminated plate. Then, in the process of examining the object, the illumination is directed to the object being examined and, in step 101, all LEDs 3 are switched off, using the driving means $S_1...S_n$, except for the regulated wavelength Lx. The adjustment begins with diodes 3 having the shortest emitted wavelength. The controll of the light intensity of the selected light source with wavelength Lx is performed using the adjusting means Ix by controlling the current flowing through the LEDs in the specified row $Lx$. In the process of determining the current of individual LED rows, the master control system in the form of a computer sends information to the lighting controller about the set current that is to flow through the drived LEDs. The current value is controlled so as to obtain a sensor response as close as possible to the saturation value. Then, in step 102, using the driving means of the next row of LEDs, the next row of LEDs in terms of wavelength should be switched on. Using the adjusting means of all rows of LEDs that have been drived so far, the intensity of their light is regulated by controlling the current flowing through these LED rows until a sensor response as close as possible to the saturation value is obtained. In step 103, it is verified whether sensor saturation has occurred in the ranges previously controlled. If saturation occurs, the intensity of the previously controlled LED rows should be reduced, using the adjusting means of the LEDs previously drived for this purpose. Steps 102 and 103 are repeated until all used rows $Li... L_n$ of LEDs are adjusted.

Thanks to this solution, an additional advantage is obtained resulting from its feature that enables shaping the light spectrum so that it maximizes the image sensor response in the measurement range. This is the possibility of acquiring the spectrum of the examined object, which has very high damping in certain ranges. A case may be considered where the object has three wavelength ranges Z1, Z2, Z3, of which in the range Z1 and Z3 it is characterized by high damping, and in the range Z2 by low damping. Using the previous solutions, two scenarios can be implemented: correct exposure in Z2 and extremely low SNR in ranges Z1 and Z3, or correct exposure in ranges Z1 and Z3 and overexposure of the obtained image from the image sensor, making it impossible to obtain any data in range Z2. The proposed solution enables such selection of LEDs 3 and their control that high intensity in ranges Z1 and Z3 and low intensity in Z2 would allow to obtain a signal of a useful level and SNR in all ranges Z1-Z3. Although it would be possible to use damping filters in range Z2, however, this requires the selection and replacement of the filter for a specific task and moreover the previously described signal discontinuities occurr.

**Claims**

1. A method for performing spectral measurements, wherein a reference plate and an examined object are illuminated or transilluminated with an illuminator consisting of at least one light source, and an image sensor that records the image obtained from the reference plate and the examined object, wherein the reference plate has a high and constant reflectivity in the analyzed wavelength range, **characterized in that** the reference plate and the object are sequentially illuminated with light having a spectrum selected so that the recorded response of the image sensor has the highest possible value in each of the measurement bands, the intensity of the light source is adjusted based on the response of the examined object, and the method comprises the following steps:

    switching off all light sources except one light source with a selected specific wavelength,
    adjusting the intensity of the light source with the selected specific wavelength until the response of the image sensor is close to the saturation value,
    switching on the next light source in terms of wavelength and adjusting its intensity until the response of the image sensor is close to the saturation value,
    examining the response of the image sensor to see if the saturation value of the image sensor has been reached in the previously selected specific wavelength ranges,
    reducing the intensity of the previously selected specific light sources if the saturation value is reached,
    repeating the above steps until the intensity of all light sources with the analyzed wavelengths is adjusted to obtain a quasi-continuous spectral response.

2. The method according to claim 1, **characterized in that** for an object with high and relatively constant reflectivity/damping, the object is illuminated with light having a spectrum as close as possible to the inverse of the quantum efficiency curve of the image sensor used during the measurement, and for other objects, the illumination is adjusted so that in areas with low reflectivity/high damping, enough light is directed to the object in the ranges indicated above to obtain a sensor response of a value high enough for the signal-to-noise ratio to be at a level sufficiently high for measurement/analysis.

3. The method according to claim 1, **characterized in that** the light source is an LED light emitting diode, and the adjustment of the LED light intensity is based on controlling the current flowing through the LED.

4. A device for performing spectral measurements comprising an illuminator, an examined object and a sensor, wherein the illuminator comprises light sources and at least one optical element shaping the light flux emitted by the light source, located between the light source and the examined object, **characterized in that** the illuminator has at least two light sources, selected so as to ensure the obtaining of a continuous frequency spectrum in the measured range, said light sources have means $I_1...I_n$ for adjusting the light intensity and means $S_1 ... S_n$ for driving the light sources so that the recorded response of the image sensor has a high value in each of the measurement bands, preferably close to the saturation value, wherein the means for adjusting the light intensity of the light source are coupled to the sensor so that, based on the response of the examined object obtained from the image sensor, they ensure an increase in the light intensity when the response of the examined object has a value less than the saturation value, and they ensure a decrease in the light intensity of the light source when the response of the examined object has a value greater than or equal to the saturation value, while the means for driving the light sources are used to obtain a continuous frequency spectrum in the measured range.

5. The device according to claim 4, **characterized in that** the light sources are LEDs, mounted on a printed circuit board (2) attached to a base (1) allowing heat dissipation, emitting light of different wavelengths.

6. The device according to claim 5, **characterized in that** between the LEDs and the examined object there is a light scattering optical element (4), ensuring uniformization of the light flux coming from the individual LEDs, and an additional optical element (5), shaping the light flux for a specific measurement/inspection task.

7. The device according to claim 5, **characterized in that** it comprises LEDs arranged in rows $L_1...L_n$, wherein the driving means $S_1...S_n$ switch on and off individual LEDs emitting different wavelengths, so that their spectra do not overlap but also, so that there are no gaps between the individual spectra, which allows to obtain a continuous spectrum emitted by the illuminator.

8. The device according to claim 5, **characterized in that** the LEDs of individual wavelengths are connected to separate adjusting means $I_1...I_n$ constituting controlled current sources.

FIG. 1

FIG. 2

FIG. 3

FIG. 4

FIG. 5

FIG. 6

FIG. 7

FIG. 8

FIG. 9

Europäisches
Patentamt

European
Patent Office

Office européen
des brevets

# EUROPEAN SEARCH REPORT

**Application Number**

EP 24 02 0238

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2002/001080 A1 (MILLER PETER J [US] ET AL) 3 January 2002 (2002-01-03) * paragraphs [0024] - [0030]; figures 1,2,3,4a,4b * ----- | 1-8 | INV. G01J3/02 G01J3/10 |
| X | US 2023/108409 A1 (DELIWALA SHRENIK [US]) 6 April 2023 (2023-04-06) * paragraphs [0109], [0318] - [0320]; figures 1, 18, 52 * ----- | 1-8 | |
| A | Anonymous Robert: "The Basics Behind Constant-Current LED Drive Circuitry - Technical Articles", , 23 August 2016 (2016-08-23), pages 1-3, XP093231701, Retrieved from the Internet: URL:https://www.allaboutcircuits.com/technical-articles/the-basics-behind-constant-current-led-drive-circuitry/ [retrieved on 2024-12-03] * the whole document * ----- | 8 | |

**TECHNICAL FIELDS SEARCHED (IPC)**

G01J

The present search report has been drawn up for all claims

| Place of search | Date of completion of the search | Examiner |
|---|---|---|
| Munich | 5 December 2024 | Hambach, Dirk |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 02 0238

This annex lists the patent family members relating to the patent documents cited in the above-mentioned European search report.
The members are as contained in the European Patent Office EDP file on
The European Patent Office is in no way liable for these particulars which are merely given for the purpose of information.

05-12-2024

| Patent document cited in search report | Publication date | Patent family member(s) | | Publication date |
|---|---|---|---|---|
| US 2002001080 A1 | 03-01-2002 | EP | 1208367 A1 | 29-05-2002 |
| | | US | 6373568 B1 | 16-04-2002 |
| | | US | 2002001080 A1 | 03-01-2002 |
| | | WO | 0111343 A1 | 15-02-2001 |
| US 2023108409 A1 | 06-04-2023 | EP | 4298414 A2 | 03-01-2024 |
| | | US | 2023108409 A1 | 06-04-2023 |
| | | US | 2023113897 A1 | 13-04-2023 |
| | | US | 2024362883 A1 | 31-10-2024 |
| | | WO | 2022182747 A2 | 01-09-2022 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8102530 B2
- DE 19736844 A1
- US 9983120 B2